**Europäisches Patentamt**

**European Patent Office**

**Office européen des brevets**

(11) Numéro de publication : **0 512 918 A1**

(12) # DEMANDE DE BREVET EUROPEEN

(21) Numéro de dépôt : **92401268.5**

(22) Date de dépôt : **06.05.92**

(51) Int. Cl.⁵ : **G01N 21/45**

(30) Priorité : **07.05.91 FR 9105601**

(43) Date de publication de la demande :
**11.11.92 Bulletin 92/46**

(84) Etats contractants désignés :
**BE CH DE GB LI**

(71) Demandeur : **PHOTONETICS**
**52 Avenue de l'Europe**
**F-78160 Marly le Roi (FR)**

(72) Inventeur : **Graindorge, Philippe**
**5 rue du Crucifix**
**F-21800 Crimolois (FR)**
Inventeur : **Trouchet, Denis**
**79 route de Sartrouville**
**F-78230 Le Pecq (FR)**

(74) Mandataire : **Michelet, Alain et al**
**Cabinet Harlé et Phelip 21 rue de la**
**Rochefoucauld**
**F-75009 Paris (FR)**

(54) **Appareil de mesure de l'indice de réfraction d'un fluide.**

(57)    La demande concerne un appareil de mesure de l'indice de réfraction d'un fluide par interférométrie en lumière blanche, à deux ondes.

Chacune des ondes traverse une enceinte (33). Le chemins optiques correspondants (38, 39) ont des longueurs différentes. La source (3) et le récepteur (15, 16, 17) sont chacun reliés à l'interféromètre (37, 41) par une fibre optique (8).

Cette disposition permet la mise en oeuvre d'enceinte de grande épaisseur par rapport à la différence de longueurs des chemins.

FIG.1

EP 0 512 918 A1

L'invention concerne un appareil de mesure de l'indice de réfraction d'un fluide.

Les méthodes interférométriques de mesure de l'indice de réfraction ont été développées il y a très longtemps.

Différents types d'interféromètres peuvent être mis en oeuvre à cet effet (interféromètre de Michelson, interféromètre de Fizeau, interféromètre de Fabry-Perot..). Lors de l'utilisation d'un interféromètre à deux ondes, l'objet transparent dont l'indice doit être mesuré est généralement placé sur le chemin de l'une des ondes. La mesure du déphasage entre les ondes, ainsi introduit permet la mesure de l'indice de réfraction de l'objet par référence à l'indice de réfraction du milieu dans lequel se propagent les deux ondes.

De telles mesures peuvent être réalisées soit en lumière monochromatique soit en lumière blanche. Il est connu que l'utilisation d'une source ayant un spectre d'émission étendu, dit interférométrie en lumière blanche, permet une mesure absolue de l'ordre d'interférence en s'affranchissant de la périodicité des interférences en lumière monochromatique.

Certaines de ces méthodes de mesure de l'indice de réfraction ont été adaptées pour tirer bénéfice de l'utilisation de fibres optiques.

L'utilisation de fibres optiques permet par exemple la réalisation de dispositifs de faible encombrement ; elle permet également de réaliser des dispositifs dans lesquels la source et le récepteur sont placés à distance de l'interféromètre lui-même.

On obtient une bonne précision de mesure dans les interféromètres en lumière blanche à deux ondes lorsque la différence de marche introduite entre les deux faisceaux est approximativement comprise entre 100 $\mu$m et 1 mm.

L'obtention d'une telle différence de marche pour la mesure d'indice de réfraction de fluide implique le recours à des cuves de faible épaisseur qui sont difficiles à manipuler. En effet, en particulier lors de la mesure d'indice de liquide, ces cuves doivent être soigneusement nettoyées et séchées lors du remplacement d'un premier liquide sur lequel une première mesure a été réalisée par un deuxième liquide sur lequel une deuxième mesure doit être réalisée. Les effets de capillarité conduisent à la rétention d'une partie du premier liquide par la cuve si les précautions nécessaires ne sont pas prises et par là risquent de fausser la deuxième mesure.

On connaît, par ailleurs, des réseaux de mesure à fibre optique par interférométrie en lumière blanche.

Le but de l'invention est la conception d'un appareil de mesure de l'indice de réfraction d'un fluide permettant une manipulation simple des fluides à mesurer et assurant une bonne précision de mesure.

A cet effet, il est proposé un appareil de mesure de l'indice de réfraction d'un fluide comportant un interféromètre en lumière blanche à deux ondes, une source à spectre large, un récepteur et une enceinte transparente destinée à contenir le fluide à mesurer.

Selon l'invention chacune des ondes de l'interféromètre traverse l'enceinte selon un chemin optique. Ces chemins optiques ont des longueurs différentes et la source et le récepteur sont chacun reliés à l'interféromètre par une fibre optique.

Dans un mode de réalisation préféré l'interféromètre est un interféromètre de Michelson comportant un séparateur de faisceaux constitué d'un cube séparateur formé de deux demi-prismes et les deux miroirs de l'interféromètre sont parallèles et portés sur un même support.

L'invention sera décrite en détail en référence aux dessins dans lesquels :

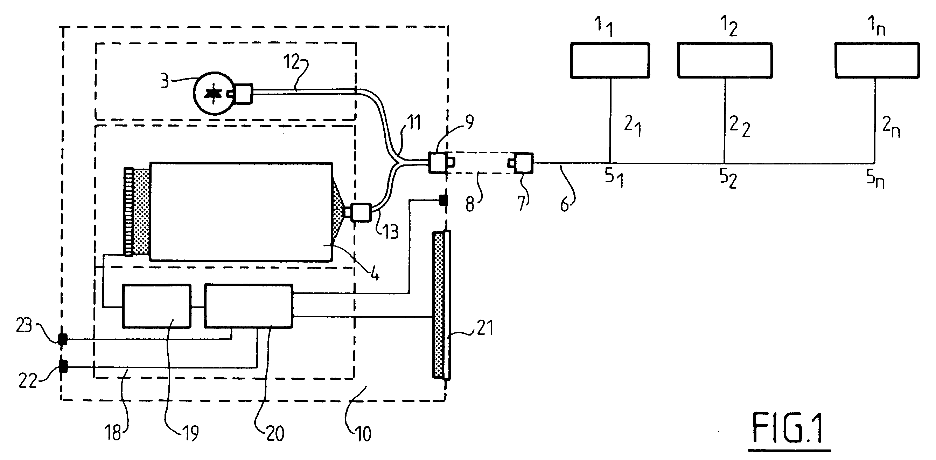

- La figure 1 est un schéma d'ensemble du dispositif de mesure.
- La figure 2 est un schéma représentatif de la tête du réfractomètre.
- La figure 3 est une vue de côté de l'optique de réception.
- La figure 4 est une vue de dessus de cette même optique de réception.

L'appareil de mesure de l'indice de réfraction d'un fluide, selon l'invention est fondé sur le principe de codage de l'information par modulation du spectre lumineux en interférométrie en lumière blanche connu sous le nom de "spectre cannelé".

Des capteurs $1_1$ $1_2$...$1_n$ sont reliés par des fibres optiques $2_1$ $2_2$...$2_n$ à une source lumineuse 3 et à une optique de réception 4.

Les fibres optiques $2_1$ $2_2$...$2_n$ sont avantageusement reliées par des coupleurs $5_1$ $5_2$...$5_n$ à une fibre unique 6. Cette fibre unique 6 est elle-même connectée par l'intermédiaire d'un connecteur 7 à une fibre 8 qui est reliée au connecteur d'entrée 9 de la centrale de mesure 10 qui incorpore la source 3 et l'optique de réception 4.

Différentes centrales de mesure sont en elles-mêmes connues. La description qui sera donnée ci-après est le meilleur exemple de réalisation donné à ce jour, il n'est toutefois qu'un mode de réalisation particulier.

La centrale de mesure 10 comporte un coupleur 11 qui permet l'utilisation d'une fibre unique 8 pour transmettre à distance le flux lumineux de la source 3 et pour recevoir le flux codé en retour, depuis les capteurs $1_1$ $1_2$...$1_n$ et effectuer leur décodage par l'optique de réception 4.

La source 3 est une source à spectre large qui peut être en particulier une diode super luminescente (DSL), une diode électro luminescente (DEL) ou une lampe à filament ou à arc.

Plusieurs sources peuvent également être couplées à la fibre 12 reliée au coupleur 11 et selon un mode de réalisation particulièrement intéressant la source 3 est constituée de deux diodes électro luminescentes (DEL) de longueurs d'onde différentes (0,85 et 0,80 $\mu$m).

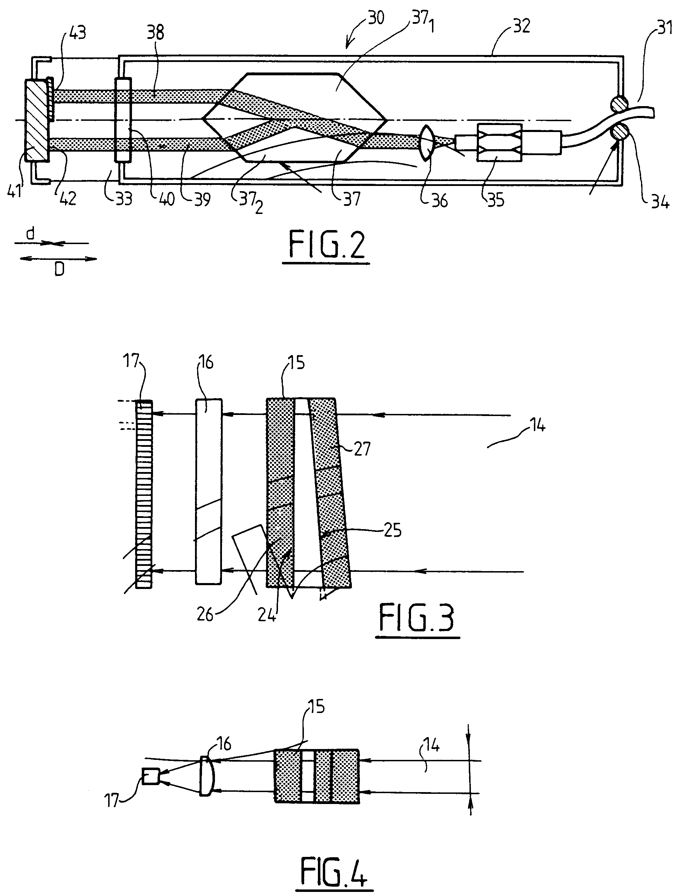

L'optique de réception 4 permet le décodage du flux en retour. Elle est représentée en détail sur les figures 3 et 4. Le flux codé, en retour des capteurs $1_1$ $1_2...1_n$ est transmis à l'optique de réception 4 par la fibre 13 reliée au coupleur 11. Elle produit ainsi le faisceau lumineux 14 qui est analysé par le dispositif 15. Les moyens optiques 16 assurent la formation de l'image des franges sur la barrette de détecteurs 17.

L'ensemble des moyens électroniques 18 comportant un interface de la barrette de diodes 19 et le micro-processeur 20 permet l'analyse des franges produites sur la barrette de photo diodes 17 et donc du flux reçu 14 ainsi que l'identification du capteur parmi l'ensemble $1_1$, $1_2$... $1_n$ ayant produit ce flux codé. Le micro-processeur 20 effectue les calculs nécessaires pour extraire la valeur de l'indice mesurée par chacun des capteurs $1_1$, $1_2$... $1_n$ et assurer les visualisations correspondantes sur l'écran d'affichage 21.

Le micro-processeur est relié à l'extérieur de la centrale de mesure 10 par les connections 22, 23 qui assurent son alimentation et permettent le branchement des interfaces nécessaires.

Le dispositif de dispersion 15 est, un coin d'air ou un coin de verre qui constitue un interféromètre de compensation variable appelé interféromètre en coin. La frange centrale est localisée au point où la compensation est égale au déphasage introduit par le capteur.

Le dispositif 15 est de préférence constitué par un coin d'air formé par les deux faces 24, 25 des lames 26, 27. Le système optique 16 est avantageusement une lentille cylindrique.

Le capteur utilisable pour la mesure de l'indice de réfraction selon l'invention est plus particulièrement représenté à la figure 2. Il peut constituer l'un ou plusieurs des capteurs $1_1$, $1_2$... $1_n$. La tête de réfractomètre généralement désignée par la référence 30 est reliée à l'optique de réception par la fibre optique 31. La tête de réfractomètre comporte un boîtier 32 équipé d'une cuve 33 destinée à recevoir le fluide dont l'indice de réfraction doit être mesuré. Afin d'assurer l'étanchéité du boîtier 32 le passage de la fibre optique 31 comporte un presse-étoupe 34. La fibre optique 31 est reliée à un connecteur optique 35, le flux émergeant est collimaté par le système optique 36 et adressé sur le séparateur de faisceaux 37 de manière à produire les deux faisceaux 38 et 39 qui entrent dans la cuve 33 par le hublot 40 et réfléchi par le miroir 41 opposé au hublot 40.

Le séparateur de faisceau 37 est par exemple un cube séparateur constitué de deux prismes $37_1$ et $37_2$.

Le miroir 41 comporte deux demi-miroirs 42 et 43 parallèles entre-eux et perpendiculaires aux faisceaux 38 et 39. Les deux demi-miroirs 42, 43 sont décalés d'une distance d dans la direction de propagation des faisceaux 38 et 39.

Ainsi le faisceau 39 réfléchi par le demi-miroir 42 parcourt un chemin optique qui diffère de celui parcouru par le faisceau 48 qui est réfléchi par le demi-miroir 43-d'une différence de chemin optique 2d x n où d est le décalage des deux demi-miroirs 42, 43 et n l'indice du fluide qui remplit la cuve 33.

Dans un autre mode de réalisation, les deux demi-miroirs 42, 43 sont dans un même plan, l'un d'entre-eux est recouvert d'une lame transparente à faces parallèles. Dans ce cas la différence de chemin optique est 2d x (n - $n_1$) où $n_1$ est l'indice de la lame.

Après réflexion sur le miroir 41 les faisceaux 38 et 39 sont combinés par le séparateur de faisceaux 37 et couplés en retour à la fibre 31 qui les relie à l'optique de réception 4.

Le cube séparateur 37 et le miroir 41 forment donc un interféromètre de Michelson.

Le faisceau réfléchi, couplé à la fibre 31 porte l'information correspondant à la différence de chemin optique de 2d n et donc de la valeur de n.

La différence de chemin optique ainsi introduite ne dépend que de l'indice n et du décalage d des demi-miroirs 42 et 43 en particulier il ne dépend pas de l'épaisseur D de la cuve constituée par la distance du hublot 40 au miroir 41. Cette distance D peut donc être choisie suffisamment grande pour que la manipulation des fluides à mesurer dans la cuve 33 soit simple, de manière à éviter les effets de la capillarité et donc par là de permettre l'obtention d'une mesure fiable.

De nombreux moyens peuvent être utilisés pour assurer le multiplexage des différents capteurs $1_1$ $1_2...1_n$ dans la fibre 6. Il peut s'agir d'un multiplexage chromatique, temporel..

Le réseau de capteurs décrit peut comporter des capteurs de différentes natures, un ou plusieurs d'entre-eux étant des réfractomètres tels que décrits.

## Revendications

1. Appareil de mesure de l'indice de réfraction d'un fluide comportant un interféromètre (37, 41) en lumière blanche à deux ondes, une source à spectre large (3), un récepteur (15, 16, 17) et une enceinte (33) destinée à contenir le fluide à mesurer, caractérisé en ce que chacune des ondes de l'interféromètre traverse l'enceinte (33) selon un chemin optique (38, 39), lesdits chemins optiques (38, 39) ayant des longueurs différentes et que la source (3) et le récepteur (15, 16, 17) sont chacun reliés à l'interféromètre (37, 41) par une fibre optique (8).

2. Appareil de mesure de l'indice de réfraction d'un fluide selon la revendication 1, caractérisé en ce que l'interféromètre (37, 41) est un interféromètre de Michelson comportant un séparateur (37) de faisceaux et deux miroirs (42, 43).

3. Appareil de mesure de l'indice de réfraction d'un fluide selon la revendication 2, caractérisé en ce que le séparateur (37) de faisceaux est un cube séparateur formé de deux demi prismes (37, 38) dont la face de contact forme deux faisceaux parallèles à partir d'un faisceau incident parallèle, les axes respectifs du faisceau incident et des deux faisceaux formés étant parallèles.

4. Appareil de mesure selon l'une des revendications 2 et 3, caractérisé en ce que les deux miroirs (42, 43) de l'interféromètre de Michelson sont parallèles et portés sur un même support (41).

5. Appareil de mesure selon l'une des revendications 2 et 3, caractérisé en ce que les deux miroirs (42, 43) sont dans un même plan et que l'un d'entre-eux est recouvert d'une lame transparente à faces parallèles.

6. Appareil de mesure selon l'une quelconque des revendications 1 à 5, caractérisé en ce que la source (3) et le récepteur (15, 16, 17) font partie d'une centrale de mesure (10).

7. Appareil de mesure selon l'une quelconque des revendications 1 à 6, caractérisé en ce que le flux émergeant de l'interféromètre est analysé par un interféromètre en coin (5) et une barrette de photodétecteurs (17).

8. Appareil de mesure selon la revendication 7, caractérisé en ce que l'interférométre en coin est un coin d'air défini par deux surfaces (24, 25).

9. Appareil de mesure selon la revendication 7, caractérisé en ce que l'interférométre en coin est une lame prismatique en verre.

FIG.1

FIG.2

FIG.3

FIG.4

EP 0 512 918 A1

Office européen
des brevets

**RAPPORT DE RECHERCHE EUROPEENNE**

Numero de la demande

EP    92 40 1268

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 338 185 (FELTEN & GUILLEAUME ENERGIETECHNIK AG) <br> * abrégé; figure 1 * <br> * colonne 2, ligne 20 - colonne 3, ligne 6 * <br> --- | 1,2,6,7,9 | G01N21/45 |
| Y | MEASUREMENT SCIENCE & TECHNOLOGY. <br> vol. 1, no. 4, Avril 1990, BRISTOL GB <br> pages 356 - 361; <br> C.SAINZ ET AL.: 'Refractometry of liquid samples with spectrally resolved white light interferometry' <br> * page 356 - page 357; figure 1 * <br> --- | 1,2,6,7,9 | |
| A | EP-A-0 163 847 (CARL-ZEISS-STIFTUNG) <br> * abrégé; figure 1 * <br> --- | 1 | |
| A | EP-A-0 423 903 (METRICOR, INC.) <br> * le document en entier * <br> --- | 1 | |
| A | ELECTRONICS LETTERS. <br> vol. 26, no. 20, 27 Septembre 1990, STEVENAGE GB <br> pages 1663 - 1665; <br> S. CHEN ET AL.: 'Electronically-scanned white light interferometry with enhanced dynamic range' <br> * page 1663 * <br> ----- | 1 | **DOMAINES TECHNIQUES RECHERCHES (Int. Cl.5)** <br><br> G01N <br> G01J |

Le présent rapport a été établi pour toutes les revendications

| Lieu de la recherche | Date d'achèvement de la recherche | Examinateur |
|---|---|---|
| BERLIN | 12 AOUT 1992 | BRISON O.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)